(19) Europäisches Patentamt
European Patent Office
Office européen des brevets

(11) **EP 2 301 404 B1**

(12) **EUROPÄISCHE PATENTSCHRIFT**

(45) Veröffentlichungstag und Bekanntmachung des Hinweises auf die Patenterteilung:
**17.08.2016   Patentblatt 2016/33**

(51) Int Cl.:
***A47L 9/14*** *(2006.01)*      ***A47L 9/19*** *(2006.01)*
***A47L 9/28*** *(2006.01)*

(21) Anmeldenummer: **10401125.9**

(22) Anmeldetag: **22.07.2010**

(54) **Verfahren zur Anzeige eines Füllgrads eines Staubbeutels und Steuerungsvorrichtung zur Ausführung des Verfahrens**

Method for displaying the fill level of a vacuum cleaner bag and control device for carrying out the method

Procédé d'affichage d'un degré de remplissage d'un sac à poussière et dispositif de commande destiné à développer le procédé

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **31.07.2009   DE 102009035717**

(43) Veröffentlichungstag der Anmeldung:
**30.03.2011   Patentblatt 2011/13**

(73) Patentinhaber: **Miele & Cie. KG**
**33332 Gütersloh (DE)**

(72) Erfinder:
• **Buhl, David**
**33613 Bielefeld (DE)**
• **Drücker, Markus**
**33335 Gütersloh (DE)**

(56) Entgegenhaltungen:
**DE-A1- 2 835 473      US-B1- 6 571 422**

EP 2 301 404 B1

**Beschreibung**

Die Erfindung betrifft ein Verfahren zur Anzeige eines Füllgrads eines Staubsammelgefäßes, insbesondere eines Staubbeutels oder einer Staubkassette in einem Staubsauger. Dabei wird insbesondere wiederholt ein Differenzdruck über dem Staubbeutel ermittelt. Sie betrifft weiterhin eine Steuerungsvorrichtung für einen Staubsauger zur Ausführung des Verfahrens.

Verfahren und Einrichtungen zur Füllgradanzeige eines Staubbeutels in einem Staubsauger sind allgemein bekannt und basieren in der Regel auf dem Prinzip der Differenzdruckmessung über dem Staubbeutel. Dabei ist ein messbarer Druckabfall über, d. h. vor und hinter dem Staubbeutel in Richtung eines Saugluftstroms umso größer, je voller der Staubbeutel ist bzw. je verstopfter die Poren seines Filtermaterials sind. So beschreibt die DE 39 14 305 C2, dass eine Abluftströmungsmenge sowie ein Differenzdruck über dem Staubbeutel ermittelt werden und dass eine Anzeigevorrichtung ein von einem Benutzer des Staubsaugers wahrnehmbares Signal erzeugt, wenn die Abluftströmungsmenge und der Differenzdruck außerhalb vorgegebener Wertebereiche liegen.

Die DE 43 23 222 C2 beschreibt, dass ein erster Differenzdruck über dem Staubbeutel, welcher sich in einem Staubraum des Staubsaugers befindet, und ein zweiter Differenzdruck zwischen verschiedenen Stellen im Staubraum ermittelt werden. Beide Differenzdruckwerte werden miteinander verglichen und eine Füllgradanzeige wird in Abhängigkeit von dem Vergleichswert gesteuert.

Eine Anzeigevorrichtung zur Füllgradanzeige eines Staubbeutels ist aus der WO 2007/017320 A1 bekannt. Dabei wird ein mechanisch gefederter Schieber von einem Bypassvolumenstrom ausgelenkt. Steigt ein Unterdruck im Staubraum an, z.B. aufgrund eines sich füllenden Staubbeutels, so wird der Bypassvolumenstrom größer und der Schieber wird stärker ausgelenkt. Dies ist von einem Benutzer wahrnehmbar.

Aus der US 6 571 422 B1 ist ein Verfahren zur Anzeige eines Füllgrads eines Staubbeutels in einem Staubsauger bekannt, bei dem über den Staubbeutel wiederholt ein Differenzdruck ermittelt wird. Dabei wird der Differenzdruck anhand eines Gültigkeitskriterium überprüft und der Füllgrad auf Basis des Differenzdruckwertes wird nur dann als Anzeigewert dargestellt, wenn das Gültigkeitskriterium erfüllt wird.

Der Differenzdruck über dem Staubbeutel ist neben der Abhängigkeit vom Füllgrad von verschiedenen anderen Faktoren, wie z. B. einer Gebläseleistung, einem Typ einer Saugdüse, einem zu saugenden Bodenbelag, Störeinflüssen, z. B. einer Blockade, insbesondere einer zugehaltenen oder verstopften Saugdüse, oder dergleichen abhängig, was die Ermittlung des Füllgrads auf Basis des Differenzdrucks erschwert.

Unter anderem aus diesem Grund weicht bei den bekannten Verfahren und Vorrichtungen ein Anzeigewert vom tatsächlichen Füllgrad des Staubbeutels ab. Zudem ist eine Genauigkeit der Anzeige stark davon abhängig, dass eine Staubsaugerleistung auf ein Maximum eingestellt und die Saugdüse des Staubsaugers von der zu saugenden Oberfläche, insbesondere vom Boden, abgehoben wird. Dies ist für einen Benutzer mit Aufwand verbunden und setzt zudem eine korrekte Durchführung des Verfahrens voraus, beispielsweise in Übereinstimmung mit einer Bedienungsanleitung. Allerdings ist auch bei korrekter Durchführung die Abweichung nicht eliminiert.

Eine Aufgabe der Erfindung besteht darin, eine verbesserte, insbesondere kontinuierliche, und genauere Anzeige des Füllgrads des Staubbeutels anzugeben. Insbesondere soll ein geeigneter Wechselzeitpunkt des Staubbeutels ermittelbar sein.

Dies erfolgt durch Auswertung eines Differenzdrucks über dem Staubbeutel. Die Abhängigkeiten von der Gebläseleistung, der abgehobenen Saugdüse oder dergleichen wird eliminiert oder zumindest reduziert. Des Weiteren können spezielle Bearbeitungssituationen, also Sondersituationen, wie z. B. eine Blockade aufgrund einer zugehaltenen oder verstopften Saugdüse oder dergleichen und/oder ein Wechsel des Staubbeutels, erkannt werden. Eine Anzeige des Füllgrads und/oder der Sondersituation(en) ist ebenfalls möglich.

Die Aufgabe wird erfindungsgemäß mit den Merkmalen des Anspruchs 1 gelöst. Dazu ist bei einem Verfahren zur Ermittlung eines Füllgrads eines Staubbeutels in einem Staubsauger, wobei wiederholt ein Differenzdruck über dem Staubbeutel ermittelt wird, vorgesehen, dass der Differenzdruck anhand eines Gültigkeitskriteriums geprüft wird oder dass mehrere Differenzdrücke anhand des Gültigkeitskriteriums geprüft werden. Der Füllgrad wird auf Basis des Differenzdruckwerts nur dann als Anzeigewert dargestellt oder die Füllgradanzeige wird nur dann geändert, wenn das Gültigkeitskriterium erfüllt wird. Das Gültigkeitskriterium ist dabei insbesondere eine Änderung des Differenzdrucks, wie ein Anstieg des Differenzdrucks über einen vorgegebenen oder vorgebbaren Wert und/oder eine Reduktion von Schwankungen des Differenzdrucks und dergleichen, insbesondere im Vergleich zu vorhergehenden Differenzdrücken. Dadurch wird gewährleistet, dass Störeinflüsse eliminiert oder reduziert werden und der Füllgrad exakter ermittelbar ist.

Diese Aufgabe wird des Weiteren gelöst durch eine Steuerungsvorrichtung für einen Staubsauger mit den Merkmalen des ersten unabhängigen Vorrichtungsanspruchs. Dazu ist vorgesehen, dass bei der Steuerungsvorrichtung mit einem Speicher und einer Verarbeitungseinheit in dem Speicher Programmcodeanweisungen zur Implementation des Verfahrens gespeichert sind, wie vorhergehend und nachfolgend beschrieben. Die Verarbeitungseinheit bewirkt im Betrieb bei Ausführung der Programmcodeanweisungen eine Ansteuerung einer Staubbeutel-Füllgradanzeige entsprechend dem ermittelten Füllgrad. Bezüglich eines Staubsaugers wird diese Aufgabe erfindungsgemäß gelöst durch die Merkmale des zweiten unabhängigen Vorrichtungsanspruchs. Dazu ist vorgesehen, dass der Staubsauger eine Steuerungsvorrichtung wie vorhergehend und nachfolgend beschrieben umfasst. Vorteilhafte Ausgestaltungen der Erfindung sind Gegenstand der Unteransprüche. Dabei verwendete Rückbeziehungen weisen auf die weitere Ausbildung des Gegenstandes des Hauptanspruchs durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Erfindungsgemäß wird ein statistischer Kennwert einer Folge von Differenzdruckwerten ermittelt. Das Gültigkeitskriterium wird erfüllt, wenn der statistische Kennwert einen vorgegebenen oder vorgebbaren Schwellwert unterschreitet.

Insbesondere wird eine Standardabweichung einer Folge von Differenzdruckwerten ermittelt und das Gültigkeitskriterium wird erfüllt, wenn die Standardabweichung den vorgegebenen oder vorgebbaren Schwellwert unterschreitet. Dadurch wird zuverlässig erkannt, wenn die Saugdüse von der zu saugenden Oberfläche abgehoben und somit der unerwünschte Einfluss von Saugdüse und Oberfläche eliminiert oder zumindest reduziert ist, so dass eine exakte Füllgradermittlung erfolgt.

Bevorzugt wird bei der Ermittlung des Füllgrads eine in Abhängigkeit von einer ermittelten oder eingestellten Gebläseleistung des Staubsaugers ausgewertete Zuordnungsmatrix und/oder mathematische Modellgleichung berücksichtigt. Dadurch wird der Einfluss der Gebläseleistung auf den Differenzdruck eliminiert oder zumindest reduziert, also eine Unabhängigkeit von der eingestellten Gebläseleistung erreicht.

Besonders bevorzugt wird die Zuordnungsmatrix zudem in Abhängigkeit von zumindest einem zusätzlichen Parameter, insbesondere einem Referenzwert für einen leeren Staubbeutel oder dergleichen, ausgewertet. Dies resultiert in einer exakteren Ermittlung des Füllgrads, da der oder die Parameter eine verbesserte Anpassung an Stör- und Einflussgrößen bei der Füllgradermittlung ermöglicht/ermöglichen.

In Ausführungsformen wird ein evtl. Vorliegen eines Sonderereignisses geprüft, indem eine Differenz zwischen dem Differenzdruck und einem vorherigen Differenzdruck ermittelt und diese mit einem vorgegebenen oder vorgebbaren Grenzwert verglichen wird. Überschreitet die ermittelte Differenz den vorgegebenen oder vorgebbaren Grenzwert wird das Sonderereignis erkannt und/oder angezeigt.

Der Begriff Sonderereignis beschreibt hier und im Folgenden beispielsweise einen Störeinfluss, z. B. eine Blockade von Saugdüse, Teleskoprohr, Saugrohrstutzen und/oder dergleichen, insbesondere eine zugehaltene oder verstopfte Saugdüse, einen Filterbeutelwechsel oder Ähnliches.

Bevorzugt ist vorgesehen, dass aus einem Speicher ein Startwert für einen Maximalwert für den Füllgrad abgerufen wird und dass wiederholt die nachfolgenden Schritte ausgeführt werden:

(a) der jeweils ermittelte Füllgrad wird mit dem Maximalwert verglichen,
(b) der ermittelte Füllgrad wird als Maximalwert übernommen, wenn der Füllgrad den Maximalwert überschreitet und
(c) der aktuelle Maximalwert wird angezeigt.

Dadurch ist der Maximalwert immer an den aktuellen Füllgrad angepasst.

Besonders bevorzugt wird der Füllgrad als Maximalwert übernommen, wenn dieser den Maximalwert um einen Wert kleiner oder gleich einem vorgegebenen oder vorgebbaren Differenzwert überschreitet. Dies verhindert, dass unplausible Füllgrade als Maximalwert im Speicher hinterlegt werden, was die Genauigkeit der Füllgradermittlung erhöht.

Dies hat den Vorteil, dass größere unerwünschte Schwankungen des Differenzdrucks von der Füllgradermittlung ausgeschlossen werden, was wiederum die Genauigkeit der Füllgradermittlung erhöht.

Bevorzugt wird der Füllgrad zusätzlich zum Differenzdruck über dem Staubbeutel auf Basis einer aktuellen Gebläseleistung des Staubsaugers und/oder auf Basis einer am Gebläse anliegenden Spannung ermittelt. Ein Zusammenhang zwischen Maximalwert und Füllgrad ändert sich mit der eingestellten Gebläseleistung: Bei höherer Leistung wird auch der Differenzdruck über dem Staubbeutel höher, bei geringerer Gebläseleistung wird der Differenzdruck geringer. Zudem kann die am Gebläse anliegende Spannung einbezogen werden, beispielsweise indem ein Korrekturfaktor bei der Füllgradermittlung berücksichtigt wird, da eine Abweichung der Spannung, z.B. eine Abweichung von einem Sollwert von 230 V oder dergleichen, eine Änderung der Gebläseleistung bewirkt und somit zu einem kleinen Fehler bei der Füllgradermittlung führt. Durch die Eliminierung oder Reduktion des Einflusses der Gebläseleistung auf den Differenzdruck wird ein genauerer Füllgrad ermittelt.

In Ausführungsformen wird vor den Schritten (a), (b) und/oder (c) ein evtl. Vorliegen eines Sonderereignisses geprüft und als Sonderereignis ein Staubbeutel-Wechsel erkannt, wenn in einer vorgegebenen oder vorgebbaren Zeitspanne nach einem Einschalten des Staubsaugers der Maximalwert um einen vorgegeben oder vorgebbaren Wert unterschritten wird. Es wird eine Störung erkannt und/oder ein Störungssignal erzeugt, wenn der Füllgrad den Maximalwert nach der vorgegebenen oder vorgebbaren Zeitspanne um den vorgegebenen oder vorgebbaren Wert unterschreitet.

Alternativ wird der Staubbeutel-Wechsel erkannt, wenn in der vorgegebenen oder vorgebbaren Zeitspanne eine Differenz von Füllgrad und Maximalwert einen vorgegebenen oder vorgebbaren Grenzwert überschreitet oder es wird eine Störung erkannt und/oder ein Störungssignal erzeugt, wenn der Grenzwert nach der vorgegebenen oder vorgebbaren Zeitspanne überschritten wird.

In einer besonders bevorzugten Ausführungsform wird bei Erkennen des Staubbeutel-Wechsels der Füllgrad als Referenzwert für einen leeren Staubbeutel insbesondere in einem nichtflüchtigen Speicher hinterlegt.

Bevorzugt wird eine Füllgradanzeige in Abhängigkeit vom ermittelten Füllgrad angesteuert. Dazu kann eine Klartextanzeige, insbesondere in einem Display, und/oder Leuchtmittel vorgesehen sein. Das Leuchtmittel kann zumindest eine Diode (LED) sein. Besonders bevorzugt erzeugt die Diode farbiges Licht, wobei die Farbe einem Füllgrad zugeordnet ist, so dass ein Nutzer einfach und rasch den Füllgrad und/oder einen Staubbeutel-Wechselzeitpunkt erkennt.

Bevorzugt wird der Füllgrad auf Basis eines ermittelten Druckverlusts über zumindest einem, dem Staubbeutel in einem Saugluftstrom vor- und/oder nachgeordneten Filter korrigiert.

Bezüglich der Steuerungsvorrichtung ist bevorzugt vorgesehen, dass diese eine elektrisch ansteuerbare Staubbeutel-Füllgradanzeige umfasst. Dies hat den Vorteil, dass ein Nutzer Informationen über den Füllgrad erhält.

In einer bevorzugten Ausführungsform umfasst die Steuerungsvorrichtung einen Zeitnehmer für eine Saugfortschrittsanzeige. Die Saugfortschrittsanzeige kann, z. B. am Ende eines Saugvorgangs, anzeigen, wie viel Staub eingesaugt wurde, beispielsweise als prozentualer Füllgrad oder Staubmasse oder dergleichen. Dadurch erhält der Nutzer Informationen über die von ihm geleistete Arbeit, was wiederum seine Motivation erhöht.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

Figur 1    eine schematische Darstellung eines Längsschnitts eines Staubsaugers,

Figur 2    ein Diagramm in welchem ein Differenzdruck in Abhängigkeit von einer Zeit t für ausgewählte Bearbeitungssituationen aufgetragen ist,

Figur 3    ein Diagramm in welchem ein Differenzdruck in Abhängigkeit von einer Zeit t für weitere ausgewählte Bearbeitungssituationen aufgetragen ist,

Figur 4    ein Diagramm in welchem ein Differenzdruck in Abhängigkeit von einer Zeit t bei einem Sonderereignis aufgetragen ist,

Figur 5    ein Diagramm in welchem eine Gebläsekennlinie und Widerstandskennlinien verschiedener Strömungswiderstände im Staubsauger dargestellt sind,

Figur 6    ein Diagramm in welchem eine Gebläsekennlinie und Widerstandskennlinien verschiedener Strömungswiderstände im Staubsauger für zwei Füllgrade dargestellt sind,

Figur 7    eine schematische Darstellung einer Ausführungsform einer erfindungsgemäßen Steuerungsvorrichtung,

Figur 8    ein Flussdiagramm einer Ausführungsform eines erfindungsgemäßen Verfahrens und

Figur 9    ein Flussdiagram einer Ausführungsform einer Unterroutine für das Verfahren gemäß Fig. 8.

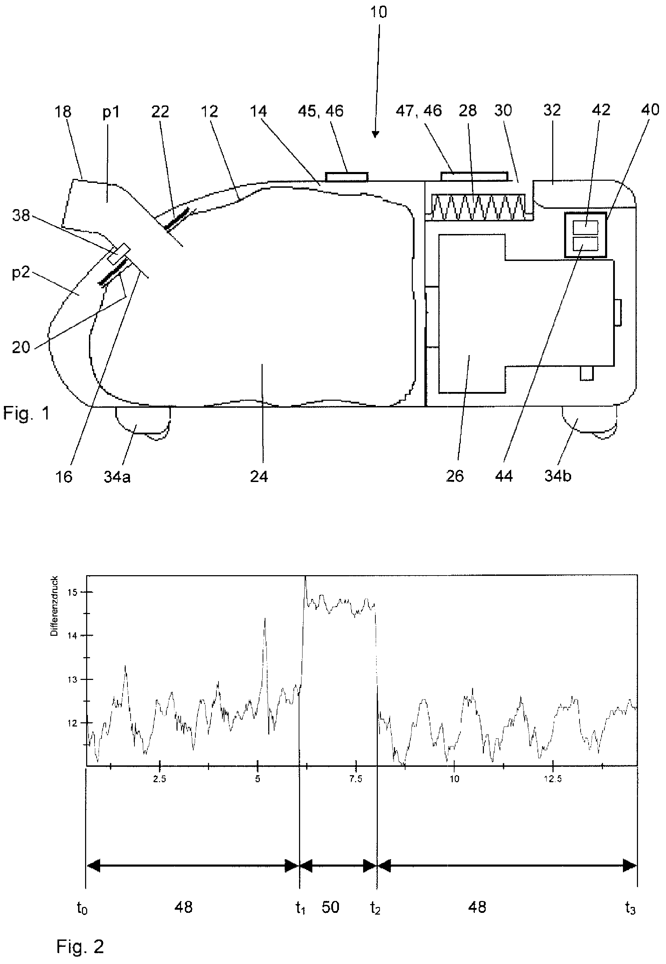

Fig. 1 zeigt eine schematische Darstellung eines Längsschnitts eines Staubsaugers 10. Ein Staubbeutel 12 ist in einem Staubraum 14 des Staubsaugers 10 angeordnet. Ein Saugrohrstutzen 16 eines Saugrohres 18 führt in die Einlassöffnung 20 des Staubbeutels 12, welcher an einer Befestigungsvorrichtung 22 im Staubraum 14 gehalten ist. Der Staubbeutel 12 hat einen Innenraum 24 zur Staubaufnahme. In einem nicht dargestellten Saugluftstrom ist dem Staubbeutel 12 ein Gebläse 26 nachgeordnet, welches wiederum ein Abluftfilter 28 und eine Abluftöffnung 30 nachgeordnet sind. Des Weiteren umfasst der Staubsauger 10 einen Ein/Aus-Schalter 32 sowie Räder 34a, 34b. Bei dem Staubsauger 10 ist ein Differenzdrucksensor 38 vorhanden, welcher den Druckunterschied zwischen dem Saugrohrstutzen 16 und dem Staubraum 14 misst. Der Differenzdrucksensor 38 ist auf einer ersten Seite mit dem Saugrohrstutzen 16 und auf einer zweiten Seite mit dem Staubraum 14 verbunden oder verbindbar, so dass ein Druck p1 im Saugrohrstutzen 16 sowie ein Druck p2 im Staubraum 14 ermittelbar ist. Aus p2 und p1 kann der Differenzdruck ermittelt werden, welcher dem Druckverlust über dem Staubbeutel 12 entspricht. Alternativ können zwei oder mehr geeignete Drucksensoren zur Ermittlung des Differenzdrucks über dem Staubbeutel 12, insbesondere im Staubraum 14 und im Saugrohrstutzen 16 vorgesehen sein.

Eine Steuerungsvorrichtung 40 des Staubsaugers 10 umfasst einen Speicher 42 und eine Verarbeitungseinheit 44, z.B. einen Mikrocontroller, und eine mit der Steuervorrichtung 40 korrespondierende Staubbeutel-Füllgradanzeige 46 zur Anzeige des Füllgrads. Alternativ können Speicher 42 und/oder Verarbeitungseinheit 44 getrennt von der Steuerungsvorrichtung 40 angeordnet, dieser jedoch zugeordnet sein. Die Füllgradanzeige 46 kann in einer separaten Anzeigeeinrichtung 45 oder in einem komplexen Display 47 mit mehreren Anzeigen angeordnet sein.

Fig. 2 zeigt ein Diagramm in welchem ein Differenzdruck in Abhängigkeit von der Zeit t für ausgewählte Bearbeitungssituationen aufgetragen ist. Für eine erste Zeitspanne t0 bis t1 liegt als Bearbeitungssituation "Saugen" 48, für eine zweite Zeitspanne t1 bis t2 "Saugdüse umsetzen" 50 und für eine dritte Zeitspanne t2 bis t3 wiederum "Saugen" 48 vor.

Differenzdrücke bei der Bearbeitungssituation "Saugen" 48 sind im Wesentlichen kleiner als Differenzdrücke bei der Bearbeitungssituation "Saugdüse umsetzen" 50. Insbesondere ein durchschnittlicher Differenzdruck bei der Bearbeitungssituation "Saugen" 48, erstes Differenzdruckniveau, ist kleiner als ein durchschnittlicher Differenzdruck bei der Bearbeitungssituation "Saugdüse umsetzen" 50, zweites Differenzdruckniveau.

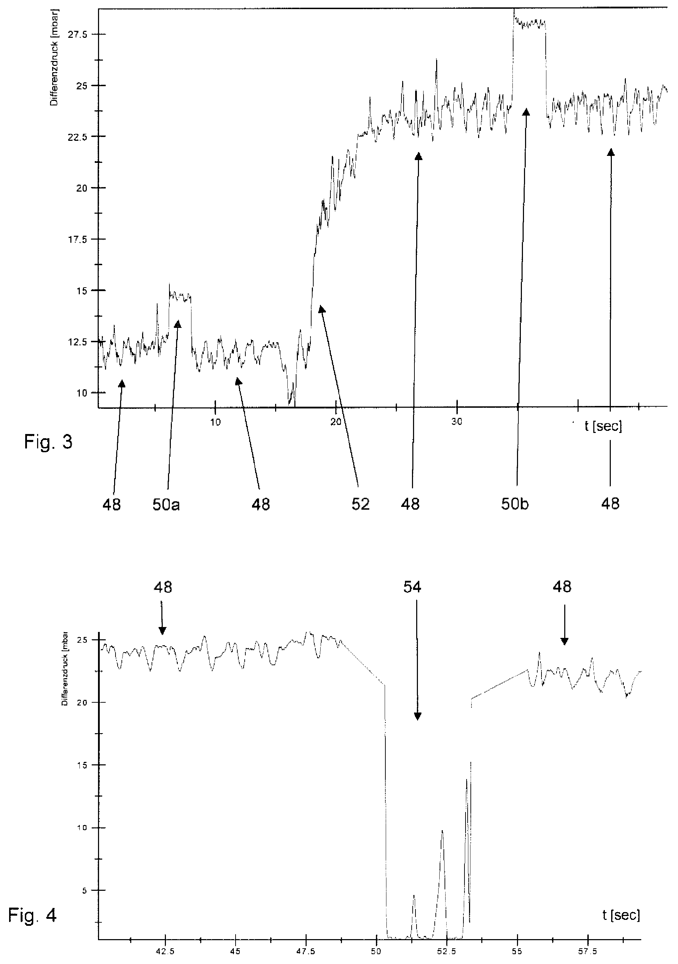

Fig. 3 zeigt ein Diagramm, in welchem der Differenzdruck in Abhängigkeit von der Zeit t für weitere ausgewählte Bearbeitungssituationen aufgetragen ist. Dabei entspricht ein erster Abschnitt des Graphen im Wesentlichen dem in Fig. 2 dargestellten. Bei der Bearbeitungssituation "Saugdüse umsetzen" 50 (erstes Umsetzen der Saugdüse 50a) hat der Staubbeutel 12 (in Fig. 1 gezeigt) einen ersten Füllgrad. Bei einem Einsaugen 52 von Staub, was eine Erhöhung des Füllgrads des Staubbeutels 12 bedingt, steigt der Differenzdruck an, hier über das erste und zweite Differenzdruckniveau. Es ergibt sich also aufgrund des Einsaugens 52 beim Saugen 48 ein drittes Differenzdruckniveau. Bei der Bearbeitungssituation "Saugdüse umsetzen" 50 (zweites Umsetzen der Saugdüse 50b) erhöht sich wiederum der Differenzdruck im Vergleich zum Differenzdruck beim Saugen 48. Es ergibt sich beim zweiten Umsetzen 50b also ein viertes Differenzdruckniveau, welches wiederum höher als das dritte Differenzdruckniveau ist.

Beispielhaft ist hier ist der Verlauf des Differenzdruck-Graphen bei einem Einsaugen 52 einer Staubmenge dargestellt, welche im Wesentlichen 25% des Fassungsvermögens des Staubbeutels 12, auch als maximaler Füllgrad bezeichnet, entspricht. Andere geeignete Staubmengen sind jedoch möglich.

Fig. 4 zeigt ein Diagramm, in welchem der Differenzdruck in Abhängigkeit von einer Zeit t bei einem Sonderereignis 54 aufgetragen ist. Im Vergleich zu einem durchschnittlichen Differenzdruck beim Saugen 48, welcher hier über 20 mbar liegt, sinkt der Differenzdruck bei Eintreten des Sonderereignisses 54 in kurzer Zeit ab, erreicht jedoch bei Wegfall des Sonderereignisses 54 rasch im Wesentlichen wieder den vorherigen durchschnittlichen Differenzdruck beim Saugen 48. Der ermittelte Füllgrad nimmt, korrespondierend zum Sonderereignis 54, also einen kleinen Wert an.

Überschreitet eine Differenz des ermittelten Füllgrads und eines im Maximalwertspeicher hinterlegten Füllgrads - Maximalwert - einen vorgegebenen oder vorgebbaren Grenzwert, wird das Sonderereignis 54 einer Blockade des Saugluftstroms stromaufwärts des Differenzdrucksensors 38 (in Fig 1 dargestellt), also z. B. eine verstopfte oder verschlossene Saugdüse oder dergleichen, erkannt. Dieses Sonderereignis 54 kann zudem mittels einer Anzeigevorrichtung 47 angezeigt werden.

Des Weiteren kann als zusätzlicher Parameter für die Ermittlung des Füllgrads eine Einschaltdauer des Staubsaugers 10 ermittelt werden. Wenn der Grenzwert zu oder nach einem vorgegeben oder vorgebbaren Zeitpunkt, z. B Grenzzeit $t_{min}$, überschritten wird, so wird die Sondersituation 54 der Blockade erkannt; wird der Grenzwert vor dem vorgegebenen oder vorgebbaren Zeitpunkt, insbesondere zeitnah zu einem Einschalten des Staubsaugers 10, überschritten, so wird ein Staubbeutel-Wechsel erkannt und der gemessene Wert des Füllgrads als Referenzwert für einen leeren Staubbeutel 12 im Speicher 42, insbesondere in einer Variablen des Speichers, hinterlegt. Im Zusammenhang mit dem Staubbeutel-Wechsel kann die Anzeigevorrichtung kalibriert werden.

Der Differenzdruck sinkt im Zusammenhang mit der Blockade, hier einer im Wesentlichen vollständig mit einer Hand verschlossenen Staubdüsenöffnung, ab.

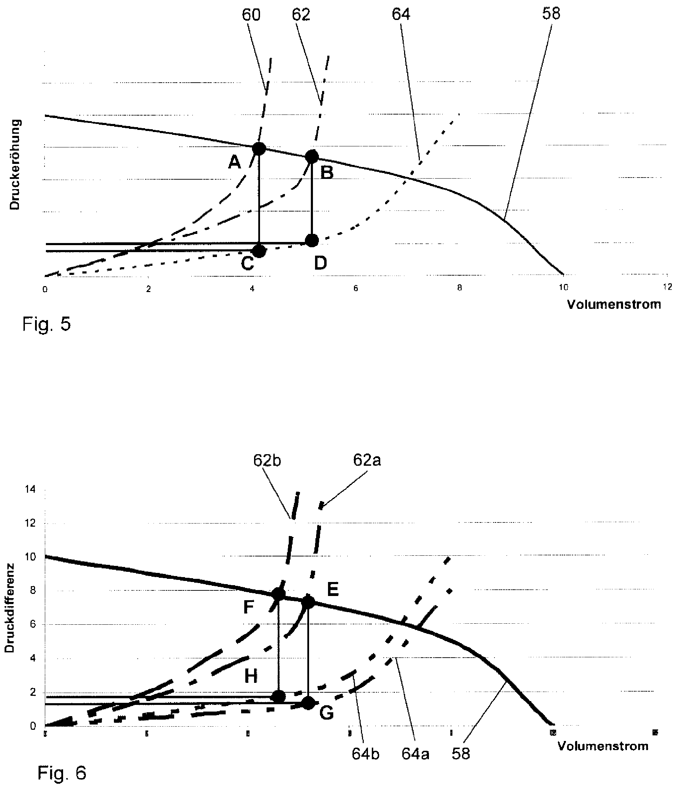

Fig. 5 zeigt ein Diagramm, in welchem eine Gebläsekennlinie 58 und Widerstandskennlinien verschiedener Strömungswiderstände im Staubsauger 10 (in Fig. 1 dargestellt) dargestellt sind. Die Widerstandskennlinien sind hier als Widerstandskennlinie des Staubsaugers bei aufgesetzter Saugdüse - erste Widerstandskennlinie 60 -, Widerstandskennlinie des Staubsaugers bei abgehobener Saugdüse - zweite Widerstandskennlinie 62 - und Widerstandskennlinie des Staubbeutels - Staubbeutel-Widerstandskennlinie 64 - dargestellt. Der Verlauf der Gebläsekennlinie 58 ist abhängig von einem Gebläsetyp, z.B. Axial- oder Radialgebläse. Hier ist die Gebläsekennlinie 58 eines beliebigen Radialgebläses exemplarisch gezeigt.

Fig. 6 zeigt ein Diagramm, in welchem eine Gebläsekennlinie 58 und Widerstandskennlinien verschiedener Strömungswiderstände im Staubsauger 10 für zwei Füllgrade dargestellt sind, nämlich die Widerstandskennlinie des Staubsaugers 10 bei abgehobener Saugdüse für den Füllgrad A 62a und für den Füllgrad B 62b sowie die Widerstandskennlinie des Staubbeutels 12 bei abgehobener Saugdüse für den Füllgrad A 64a und den Füllgrad B 64b.

Dabei entsprechen die Gebläsekennlinie 58 sowie die Widerstandskennlinie des Staubsaugers 10 und des Staubbeutels 12 bei Füllgrad A 62a, 64a der Gebläsekennlinie 58 und der ersten und zweiten Widerstandskennlinien 62, 64 wie in Fig. 5 dargestellt. Für die Widerstandskennlinien ergibt sich, dass bei einer Erhöhung des Füllgrads von A zu B bei gleichem Volumenstrom die Druckdifferenz erhöht ist.

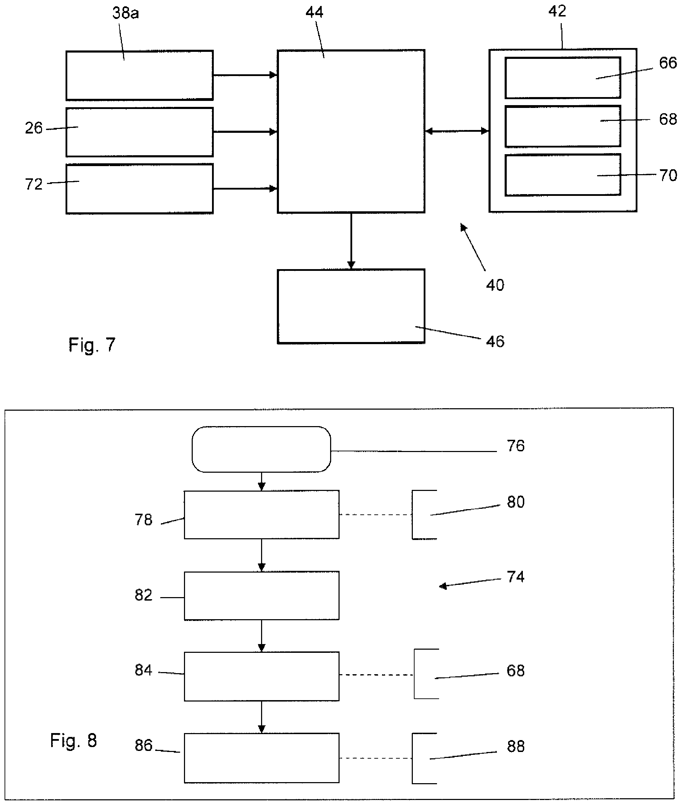

Fig. 7 zeigt eine schematische Darstellung einer Ausführungsform der erfindungsgemäßen Steuerungsvorrichtung 40 mit einer Verarbeitungseinheit 44, hier als Mikrocontroller dargestellt, mit einem Speicher 42, z. B. einem nichtflüchtigen Speicher, in welchem ein Maximalwert 66 des Staubbeutel-Füllgrads hinterlegt oder hinterlegbar ist. Zudem kann ein Referenzwert für einen leeren Staubbeutel 68 und/oder weitere Parameter 70 hinterlegt sein. Die Verarbeitungseinheit 44 erhält zumindest ein Eingangssignal eines Differenzdrucksensors 38. Zusätzlich kann sie zumindest ein Eingangssignal von zumindest einem weiteren Drucksensor erhalten oder alternativ Eingangssignale von zumindest zwei Drucksensoren. Des Weiteren erhält sie als Eingangssignal zumindest ein mit einer Leistungseinstellung des Gebläses 26 korrespondierendes Signal und/oder ein mit einer Netzspannung korrespondierendes Signal, hier von einem Netzspannungssensor 72. Im Speicher 42 sind Programmcodeanweisungen zur Implementation des Verfahrens gespeichert, wie vorhergehend und nachfolgend beschrieben. Mittels der Verarbeitungseinheit 44 ist eine Staubbeutel-Füllgradanzeige 46, beispielsweise LCD-Anzeige, Siebensegmentanzeige und/oder LED(s), ansteuerbar. Zudem kann die Steuerungsvorrichtung 44 zumindest einen Zeitnehmer für eine Saugfortschrittsanzeige umfassen.

Fig. 8 zeigt ein Flussdiagramm einer Ausführungsform des erfindungsgemäßen Verfahrens, hier als Hauptprogramm 74 dargestellt, wobei nach einem Start 76 des Hauptprogramms 74 ein Register beschrieben 78 wird, insbesondere mit Werten, welche eine Unterroutine 80 und/oder Timer, Anaolg-Digital-Umwandler und/oder dergleichen betreffen. Es erfolgt eine Variablendefinition 82, bevor ein Lesen von Algorithmusparametern 84 für die Füllgradermittlung, z. B. der Referenzwert für einen leeren Staubbeutel 68, aus dem Speicher 42 erfolgt und die Unterroutine 90, insbesondere als Endlosschleife 86, gestartet wird. Es erfolgt nach Abarbeitung jedes Aufrufs der Unterroutine 90 eine Rückkehr 88 der Verarbeitungseinheit 44 (in Fig. 7 gezeigt) in die Endlosschleife 86 des Hauptprogramms 74.

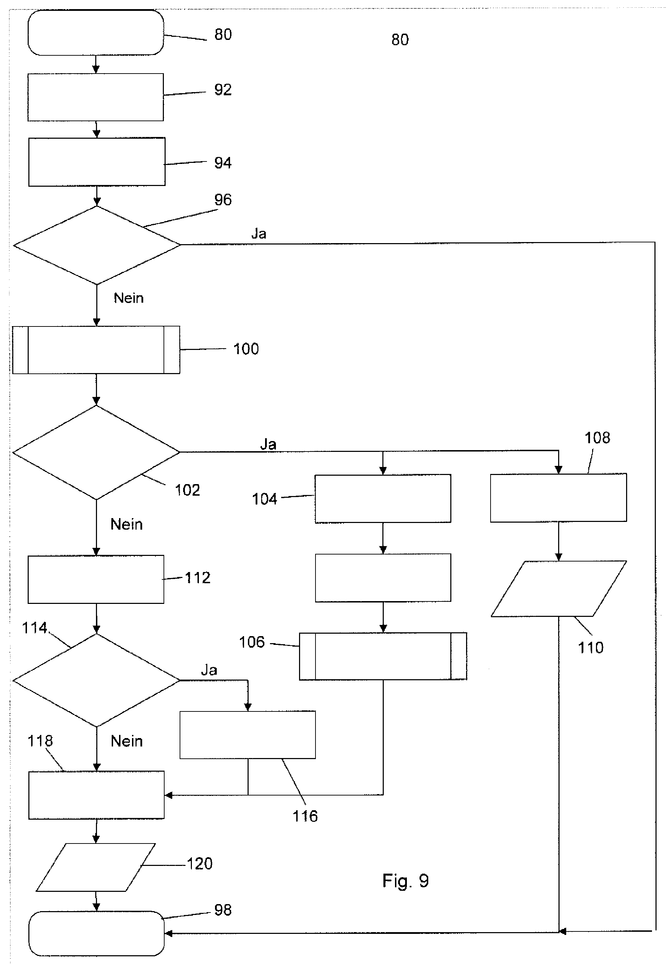

Fig. 9 zeigt ein Flussdiagramm einer Ausführungsform der Unterroutine 90 für das Verfahren gemäß Fig. 8. Die Unterroutine 90 ermittelt wiederholt, insbesondere im 10 ms Takt zunächst eine Gebläseleistung und/oder Netzspannung 92. Zudem wird der Differenzdruck ermittelt 94. Es erfolgt sodann eine Prüfung 96 der ermittelten Werte mittels eines oder mehrerer Gültigkeitskriteriums/-kriterien, z. B. eine Standardabweichung. Ist das oder jedes Gültigkeitskriterium verletzt, so wird die Unterroutine 98 beendet. Liegt keine Verletzung vor, so werden Sensordaten auf das Vorliegen eines Sonderereignisses 54 (in Fig. 4 dargestellt) geprüft 100 und aufbereitet. Wird ein Sonderereignis festgestellt 102, so werden abhängig von einer Art des Sonderereignisses eine Staubbeutelwechselroutine gestartet 104, der Maximalwertspeicher zurückgesetzt 106 und ein Referenzwert für einen leeren Staubbeutel 12 ermittelt 106, oder es erfolgt, wenn eine Druckabweichung festgestellt 108 wird, eine Störungsanzeige 110 und das Ende der Unterroutine 98. Wird kein Sonderereignis festgestellt 102, so erfolgt eine Ermittlung des Staubbeutel-Füllgrads 112. Diese liefert einen aktuellen Staubbeutel-Füllgrad und bezieht Differenzdruck, Gebläseleistung und den Referenzwert für den leeren Staubbeutel 68 (in Fig. 7 dargestellt) ein. Der jeweils ermittelte Füllgrad wird mit dem Maximalwert aus dem Maximalwertspeicher verglichen 114 und der ermittelte Füllgrad wird als Maximalwert übernommen, der Maximalwertspeicher wird also aktualisiert 116, wenn der Füllgrad den Maximalwert überschreitet und der Maximalwert wird sodann als Anzeigewert verwendet 118. Ist der hinterlegte Maximalwert nicht überschritten, so wird der hinterlegte Maximalwert als Anzeigewert verwendet 118. Es erfolgt ein Darstellung des Anzeigewertes 120 und das Ende der Unterroutine 98.

Im Folgenden wird anhand ausgewählter Figuren das Verfahren näher erläutert.

Bei der Bearbeitungssituation "Saugen" 48 wie in Fig. 2 ist die Saugdüse auf eine zu saugende Oberfläche aufgesetzt, z. B. den Fußboden, und wird im Wechsel vorwärts und rückwärts bewegt, was Schwankungen des Differenzdrucks insbesondere einen alternierenden Differenzdruck in Abhängigkeit von der Bewegungsrichtung bedingt. Dabei ist ein mittlerer Differenzdruck abhängig von einem Bodenbelag und einem verwendeten Saugdüsentyp. Ein eindeutiger Zusammenhang von Staubbeutel-Füllgrad und ermitteltem Differenzdruck ist im Wesentlichen nicht gegeben. Bei der Bearbeitungssituation "Saugdüse umsetzen" 50, z. B. weil der Saugvorgang für einen bestimmten Oberflächenbereich beendet ist oder ein anderer Bereich gesaugt werden soll, wird die Saugdüse von der Oberfläche abgehoben. Dabei steigt der Differenzdruck im Vergleich zur Bearbeitungssituation "Saugen" 48 an und bleibt für die Zeit, in welcher die Saugdüse abgehoben ist, auf einem Niveau, welches im Wesentlichen höher ist als ein Differenzdruckniveau bei aufgesetzter Saugdüse, also bei der Bearbeitungssituation "Saugen" 48.

Es ist zudem möglich, eine Standardabweichung ausgewählter oder aller Differenzdruckwerte zu ermitteln. Bei der Bearbeitungssituation "Saugdüse umsetzen" 50 ist die Standardabweichung kleiner, insbesondere signifikant kleiner, als bei der Bearbeitungssituation "Saugen" 48. Eine Signifikanz kann dabei mittels bekannter statistischer Methoden ermittelt werden.

In Fig. 3 ist die Änderung des Differenzdrucks bei einem Einsaugen 52 einer Staubmenge, welche im Wesentlichen 25% des Fassungsvermögens (auch als maximaler Füllgrad bezeichnet) des Staubbeutels 12 entspricht, beispielhaft dargestellt. Beim ersten Umsetzen 50a der Saugdüse wird dem Differenzdruck von etwa 15 mbar ein Füllgrad A zugeordnet. Bei einem Einsaugen 52 einer Staubmenge, welche im Wesentlichen 25% des Fassungsvermögens des Staubbeutels 12 entspricht, erhöht sich der Differenzdruck auf einen Wert von etwa 28 mbar. Mittels hinterlegter Zusammenhänge, z. B. einer mathematischen Modellgleichung und/oder Zuordnungsmatrix, wird diesem höheren Wert des Differenzdrucks ein zweiter Füllgrad (Füllgrad A + 25%) zugeordnet.

Die physikalischen Grundlagen für die Ermittlung des Füllgrads können der Fig. 5 entnommen werden. Das Gebläse 26 muss Strömungswiderstände überwinden. Diese verhalten sich entsprechend der Formel:

$$(1) \qquad \Delta p = 1/2 \cdot \xi \, \rho \, v^2$$

mit

$\xi$ = Strömungswiderstandbeiwert

$\rho$ = Dichte der Luft

v = Strömungsgeschwindigkeit

Der Strömungswiderstandsbeiwert ergibt sich aus der Addition der Widerstandsbeiwerte der verschiedenen Einzelwiderstände, nämlich:

Bodenbelag,

Saugdüse,

Strömungsweg, insbesondere Teleskoprohr, Handgriff, Saugschlauch,

Staubbeutel,

Motorschutzfilter,

Abluftfilter.

Zusätzliche Widerstandsbeiwerte sind möglich.

Somit ergibt sich für den Druckverlust für den gesamten Staubsauger 10:

$$(2) \qquad \Delta p_{ges} = 1/2 \cdot \sum_{i}^{n} \xi_i \, \rho \, v^2$$

In einer üblichen Bearbeitungssituation bei aufgesetzter Saugdüse, insbesondere auf einem Boden aufgesetzter Saugdüse, stellt sich, wie in Fig. 5 gezeigt, der Arbeitspunkt A ein. Dieser Arbeitspunkt A ist abhängig von allen oben aufgeführten Einzelwiderständen, nämlich Bodenbelag, Saugdüse, Strömungsweg Teleskoprohr / Handgriff / Saugschlauch, Staubbeutel 12, Motorschutzfilter und Abluftfilter 28. Mittels der Drucksensoren, insbesondere mittels des Differenzdrucksensors 38, wird der Druckverlust ermittelt, welcher vom Staubbeutel 12 verursacht wird. Entsprechend der Staubbeutel-Widerstandskennlinie 64 wird die Druckdifferenz gemessen, die durch Punkt C festgelegt ist. Diesem Wert lässt sich jedoch kein eindeutiger Wert für den Staubbeutel-Füllgrad zuordnen, da beispielsweise ein anderer Saugdüsentyp und/oder anderer Boden den Arbeitspunkt A auf der Gebläsekennlinie 58 wandern lässt und somit andere Werte des Differenzdrucks im Punkt C gemessen werden, obwohl sich der Füllgrad nicht geändert hat.

Diese Abhängigkeit lässt sich vermeiden oder zumindest verringern, indem Werte des Differenzdrucks verwendet werden, welche im Moment des Abhebens der Saugdüse ermittelt werden, z.B. wenn die Saugdüse von einem bereits gereinigten Bereich in einen anderen, noch zu reinigenden Bereich bei eingeschaltetem Gebläse 26 umgesetzt wird ("Saugdüse umsetzen" 50). Dabei stellt sich der Arbeitspunkt B ein, der sich im Vergleich zum Arbeitspunkt A dadurch auszeichnet, dass ein höherer Volumenstrom durch das Gebläse 26 gefördert wird. Aufgrund der Staubbeutel-Widerstandskennlinie 64 wird ein Druckverlust durch den Staubbeutel 12 verursacht, der dem Wert des Punktes D entspricht. Dieser Wert lässt sich sehr viel einfacher einem Füllgrad zuordnen, da die Abhängigkeit vom Saugdüsentyp und Bodenbelag eliminiert ist.

Die Abhängigkeit von den Sättigungszuständen des Motorschutzfilters und Abluftfilters 28 ist gering, so dass der dadurch verursachte Fehler in der Füllgradermittlung vernachlässigbar ist. In einer alternativen Ausführungsform können diese Einflüsse jedoch berücksichtigt werden, indem mittels weiterer geeigneter Drucksensoren der Druckverlust durch den Motorschutzfilter und/oder Abluftfilter 28 etc. ermittelt und deren Werte bei der Füllgradbestimmung als geeignet berücksichtigt werden.

Es ist besonders vorteilhaft, dass die Werte des Druckverlustes im Punkt D im Wesentlichen in jeder Bearbeitungssituation höher sind als im Punkt C, da dies die Verwendung des Maximalwertspeichers ermöglicht.

In Fig. 6 ist der Einfluss eines sich steigernden Füllgrades des Staubbeutels 12 auf Volumenstrom und Druckdifferenz bei abgehobener Saugdüse dargestellt. Hat der Staubbeutel 12 einen Füllgrad A, welcher beliebig sein kann, jedoch kleiner als 100% ist, so stellt sich der Arbeitspunkt E ein. Der mittels des Differenzdrucksensors 38 ermittelte Druckverlust durch den Staubbeutel 12 entspricht dem Punkt G und wird entsprechend der im Speicher 42 hinterlegten Zuordnungsmatrix oder des Algorithmus (z. B. einer mathematischen Modellgleichung oder dergleichen) dem Füllgrad A zugeordnet. Wird durch eingesaugten Staub der Füllgrad des Staubbeutels 12 erhöht, so verändert sich entsprechend der Formel (1) die Staubbeutel-Widerstandskennlinie 64, da der Widerstandsbeiwert des Staubbeutels 12 bei größerer Füllung ansteigt. Gleichzeitig verändert sich auch der Verlauf der Gebläsekennlinie 58, da aufgrund der Formel (2) auch der Widerstandsbeiwert des gesamten Staubsaugers 10 größer wird. Bei Füllgrad B stellt sich folglich der Arbeitspunkt F ein. Der Differenzdrucksensor 38 misst nun eine Druckdifferenz über dem Staubbeutel 12, die dem Zustandspunkt H entspricht. Diese kann nun wiederum eindeutig dem Füllgrad B zugeordnet und zur Anzeige gebracht werden.

Damit lässt sich die Erfindung kurz wie folgt darstellen:

Angegeben werden ein Verfahren zur Anzeige eines Füllgrads eines Staubbeutels 12 in einem Staubsauger 10, wobei wiederholt ein Differenzdruck über dem Staubbeutel 12 ermittelt wird, wobei der Differenzdruck anhand eines Gültigkeitskriteriums geprüft wird und wobei der Füllgrad auf Basis des Differenzdruckwerts ermittelt wird, wenn das Gültigkeitskriterium erfüllt wird, eine Steuerungsvorrichtung 40 für einen Staubsauger 10 mit einem Speicher 42 und einer Verarbeitungseinheit 44, wobei in dem Speicher 42 Programmcodeanweisungen zur Implementation des Verfahrens gespeichert sind und wobei die Verarbeitungseinheit 44 im Betrieb bei Ausführung der Programmcodeanweisungen eine Ansteuerung einer Staubbeutel-Füllgradanzeige 46 entsprechend dem ermittelten Füllgrad bewirkt.

Bezugszeichenliste

| 10 | Staubsauger |
| 12 | Staubbeutel |
| 14 | Staubraum |
| 16 | Saugrohrstutzen |
| 18 | Saugrohr |
| 20 | Einlassöffnung |
| 22 | Befestigungsvorrichtung |
| 24 | Innenraum |
| 26 | Gebläse |
| 28 | Abluftfilter |
| 30 | Abluftöffnung |
| 32 | Ein/Aus-Schalter |
| 34a, 34b | Räder |
| 38 | Differenzdrucksensor |
| 40 | Steuerungsvorrichtung |
| 42 | Speicher |
| 44 | Verarbeitungseinheit |
| 45 | Separate Anzeige |
| 46 | Staubbeutel-Füllgradanzeige |
| 47 | Display |
| 48 | Saugen |
| 50 | Saugdüse umsetzen |
| 50a | erstes Umsetzen |
| 50b | zweites Umsetzen |
| 52 | Einsaugen |
| 54 | Sonderereignis |
| 58 | Gebläsekennlinie |
| 60 | erste Widerstandskennlinie |
| 62 | zweite Widerstandskennlinie |
| 62a | Widerstandskennlinie Staubsauger (Füllgrad A) |
| 62b | Widerstandskennlinie Staubsauger (Füllgrad B) |
| 64 | Staubbeutel-Widerstandskennlinie |
| 64a | Widerstandskennlinie Staubbeutel (Füllgrad A) |
| 64b | Widerstandskennlinie Staubbeutel (Füllgrad B) |
| 66 | Maximalwert |
| 68 | Referenzwert leerer Staubbeutel |
| 70 | Parameter |
| 72 | Netzspannungssensor |
| 74 | Hauptprogramm |
| 76 | Start |
| 78 | Register beschreiben |
| 80 | Anfang Unterroutine |
| 82 | Variablendefinition |
| 84 | Lesen von Algorithmusparametern |
| 86 | Aufruf der Unterroutine |
| 88 | Rückkehr |
| 90 | Unterroutine |
| 92 | Ermittlung Gebläseleistung und/oder Netzspannung |
| 94 | Ermittlung Differenzdruck |
| 98 | Rückkher zum Aufruf 86 der Unterroutine |
| 100 | Prüfung Sonderereignis |
| 102 | Feststellung Sonderereignis |
| 104 | Start Staubbeutelwechselroutine |
| 106 | Zurücksetzen Maximalwertspeicher |
| 106 | Ermittlung Referenzwert leerer Staubbeutel |
| 108 | Feststellung Druckabweichung |
| 110 | Störungsanzeige |
| 112 | Ermittlung Staubbeutel-Füllgrad |
| 114 | Vergleich Füllgrad und Maximalwert |
| 116 | Aktualisierung Maximalwertspeicher |
| 118 | Verwendung Maximalwert als Anzeigewert |
| 120 | Darstellung Anzeigewerte |

**Patentansprüche**

1. Verfahren zur Anzeige eines Füllgrads eines Staubbeutels (12) in einem Staubsauger (10), wobei mindestens wiederholt ein Differenzdruck über dem Staubbeutel (12) ermittelt wird, dass der Differenzdruck anhand eines Gültigkeitskriteriums geprüft wird und der Füllgrad auf Basis des Differenzdruckwerts nur dann als Anzeigewert dargestellt oder die

Füllgrandanzeige nur dann geändert wird, wenn das Gültigkeitskriterium erfüllt wird, **dadurch gekennzeichnet,**

**dass** ein statistischer Kennwert, insbesondere eine Standardabweichung, einer Folge von Differenzdruckwerten ermittelt wird und das Gültigkeitskriterium erfüllt wird, wenn der statistische Kennwert einen vorgegebenen oder vorgebbaren Schwellwert unterschreitet.

2. Verfahren nach Anspruch 1 oder 2, wobei bei der Ermittlung des Füllgrads eine in Abhängigkeit von einer ermittelten oder eingestellten Leistung eines Gebläses (26) des Staubsaugers (10) ausgewertete Zuordnungsmatrix berücksichtigt wird.

3. Verfahren nach Anspruch 3, wobei die Zuordnungsmatrix zudem in Abhängigkeit von zumindest einem zusätzlichen Parameter (70), insbesondere einem Referenzwert für einen leeren Staubbeutel (68), ausgewertet wird.

4. Verfahren nach einem der vorangehenden Ansprüche, wobei aus einem Speicher (42) ein Startwert für einen Maximalwert für den Füllgrad abgerufen wird und

wiederholt die nachfolgenden Schritte ausgeführt werden:

(a) der jeweils ermittelte Füllgrad wird mit dem Maximalwert verglichen (114),
(b) der ermittelte Füllgrad wird als Maximalwert übernommen (116), wenn der Füllgrad den Maximalwert überschreitet und
(c) der aktuelle Maximalwert wird angezeigt (120).

5. Verfahren nach Anspruch 5, wobei der Füllgrad als Maximalwert übernommen (116) wird, wenn dieser den Maximalwert um einen Wert kleiner oder gleich einem vorgegebenen oder vorgebbaren Differenzwert überschreitet.

6. Verfahren nach einem der vorangehenden Ansprüche, wobei der Füllgrad zusätzlich zum Differenzdruck über dem Staubbeutel (12) auf Basis einer aktuellen Leistung eines Gebläses (26) des Staubsaugers (10) und/oder auf Basis einer am Gebläse (26) anliegenden Spannung ermittelt wird.

7. Verfahren nach einem der Ansprüche 5 bis 7, wobei vor den Schritten (a), (b) und/oder (c) ein evtl. Vorliegen eines Sonderereignisses (54) geprüft wird und als Sonderereignis (54) ein Staubbeutel-Wechsel erkannt wird, wenn in einer vorgegebenen oder vorgebbaren Zeitspanne nach einem Einschalten des Staubsaugers (10) der Maximalwert um einen vorgegeben oder vorgebbaren Wert unterschritten wird, oder eine Störung erkannt und/oder ein Störungssignal erzeugt wird, wenn der Füllgrad den Maximalwert nach der vorgegebenen oder vorgebbaren Zeitspanne um den vorgegebenen oder vorgebbaren Wert unterschreitet.

8. Verfahren nach Anspruch 8, wobei bei Erkennen des Staubbeutel-Wechsels der Füllgrad als Referenzwert für einen leeren Staubbeutel (68) insbesondere in einem nichtflüchtigen Speicher hinterlegt wird.

9. Verfahren nach einem der vorangehenden Ansprüche, wobei eine Füllgradanzeige (46) in Abhängigkeit vom ermittelten Füllgrad angesteuert wird.

10. Verfahren nach einem der vorangehenden Ansprüche, wobei der Füllgrad auf Basis eines ermittelten Druckverlusts über zumindest einem, dem Staubbeutel (12) in einem Saugluftstrom nachgeordneten Filter korrigiert wird.

11. Steuerungsvorrichtung (40) für einen Staubsauger (10) mit einem Speicher (42) und einer Verarbeitungseinheit (44), wobei in dem Speicher (42) Programmcodeanweisungen zur Implementation des Verfahrens nach einem der vorangehenden Ansprüche gespeichert sind und wobei die Verarbeitungseinheit (44) im Betrieb bei Ausführung der Programmcodeanweisungen eine Ansteuerung einer Staubbeutel-Füllgradanzeige (46) entsprechend dem ermittelten Füllgrad bewirkt.

12. Steuerungsvorrichtung nach Anspruch 12 mit einer elektrisch ansteuerbaren Staubbeutel-Füllgradanzeige (46).

13. Steuerungsvorrichtung nach einem der Ansprüche 12 oder 13 mit einem Zeitnehmer für eine Saugfortschrittsanzeige.

**Claims**

1. Method for displaying a fill level of a dustbag (12) in a vacuum cleaner (10), a differential pressure above the dustbag (12) being determined at least repeatedly such that the differential pressure is checked by means of a validity criterion and the fill level, which is based on the differential pressure value, is shown as a display value only, or the fill level display is only changed when the validity criterion is fulfilled, **characterised in that** a statistical characteristic value, in particular a standard deviation, of a sequence of differential pressure values is determined, and the validity criterion is fulfilled when the statistical characteristic value falls below a predetermined or predeterminable threshold value.

**2.** Method according to either claim 1 or claim 2, wherein an assignment matrix that is evaluated on the basis of a determined or set power of a fan (26) of the vacuum cleaner (10) is taken into account when determining the fill level.

**3.** Method according to claim 3, wherein the assignment matrix is also evaluated on the basis of at least one additional parameter (70), in particular a reference value for an empty dustbag (68).

**4.** Method according to any of the preceding claims, wherein a start value for a maximum value for the fill level is called up from a memory (42) and the following steps are repeatedly carried out:

> (a) the fill level determined in each case is compared with the maximum value (114),
> (b) the determined fill level is taken as the maximum value (116) when the fill level exceeds the maximum value, and
> (c) the current maximum value is displayed (120).

**5.** Method according to claim 5, wherein the fill level is taken as the maximum value (116) when said level exceeds the maximum value by a value that is smaller than or equal to a predetermined or predeterminable differential value.

**6.** Method according to any of the preceding claims, wherein, in addition to the differential pressure above the dustbag (12), the fill level is determined on the basis of the current power of a fan (26) of the vacuum cleaner (10) and/or on the basis of a voltage applied to the fan (26).

**7.** Method according to any of claims 5 to 7, wherein, prior to steps (a), (b) and/or (c), the possible presence of an exceptional event (54) is checked and a dustbag exchange is identified as an exceptional event (54) if the maximum value is fallen below by a predetermined or predeterminable value in a predetermined or predeterminable time period after the vacuum cleaner (10) has been switched on, or a fault is detected and/or a fault signal is generated if the fill level falls below the maximum value by the predetermined or predeterminable value after the predetermined or predeterminable time period.

**8.** Method according to claim 8, wherein, when detecting the dustbag exchange, the fill level is stored as a reference value for an empty dustbag (68), in particular in a non-volatile memory.

**9.** Method according to any of the preceding claims, wherein a fill level display (46) is controlled on the basis of the determined fill level.

**10.** Method according to any of the preceding claims, wherein the fill level is corrected on the basis of a determined pressure loss above at least one filter arranged downstream of the dustbag (12) in a suction airflow.

**11.** Control device (40) for a vacuum cleaner (10), comprising a memory (42) and a processing unit (44), wherein program code instructions for implementing the method according to any of the preceding claims are stored in the memory (42) and wherein, during operation when carrying out the program code instructions, the processing unit (44) causes a dustbag fill level display (46) to be controlled in accordance with the determined fill level.

**12.** Control device according to claim 12, comprising an electrically controllable dustbag fill level display (46).

**13.** Control device according to either claim 12 or claim 13, comprising a timer for a suction progress display.

**Revendications**

**1.** Procédé d'affichage d'un degré de remplissage d'un sac à poussière (12) dans un aspirateur (10), dans lequel une pression différentielle sur le sac à poussière (12) est déterminée au moins de façon répétée, la pression différentielle est vérifiée à l'aide d'un critère de validité, et le degré de remplissage n'est représenté en tant que valeur d'affichage sur la base de la valeur de pression différentielle, ou l'affichage de degré de remplissage n'est modifié que quand le critère de validité est satisfait, **caractérisé en ce qu'**une valeur caractéristique statistique, en particulier un écart type, d'une séquence de valeurs de pression différentielle est déterminée et le critère de validité est rempli quand la valeur caractéristique statistique passe au-dessous d'une valeur de seuil prédéfinie ou pouvant être prédéfinie.

**2.** Procédé selon la revendication 1 ou 2, dans lequel une matrice d'affectation analysée en fonction d'une puissance déterminée ou réglée d'un ventilateur (26) de l'aspirateur (10) est prise en compte lors de la détermination du degré de remplissage.

**3.** Procédé selon la revendication 3, dans lequel la matrice d'affectation est analysée en outre en fonction d'au moins un paramètre (70) supplémentaire, en particulier d'une valeur de référence pour un sac à poussière (68) vide.

**4.** Procédé selon l'une des revendications précédentes, dans lequel une valeur de départ pour une valeur maximale est appelée pour le degré de remplissage à partir d'une mémoire (42), et les étapes suivantes sont réalisées de façon répétée :

(a) le degré de remplissage déterminé respectivement est comparé à la valeur maximale (114),
(b) le degré de remplissage déterminé est pris en charge en tant que valeur maximale (116) quand le degré de remplissage passe au-dessus de la valeur maximale, et
c) la valeur maximale actuelle est affichée (120).

5. Procédé selon la revendication 5, dans lequel le degré de remplissage est pris en charge en tant que valeur maximale (116) quand il passe au-dessus de la valeur maximale selon une valeur inférieure ou égale à une valeur différentielle prédéfinie ou pouvant être prédéfinie.

6. Procédé selon l'une des revendications précédentes, dans lequel, en plus de la pression différentielle sur le sac à poussière (12), le degré de remplissage est déterminé sur la base d'une puissance actuelle d'un ventilateur (26) de l'aspirateur (10) et/ou sur la base d'une tension présente sur le ventilateur (26).

7. Procédé selon l'une des revendications 5 à 7, dans lequel, avant les étapes (a), (b) et/ou (c), une éventuelle présence d'un événement particulier (54) est vérifiée, et dans lequel un remplacement du sac à poussière est détecté en tant qu'événement particulier (54) quand, dans une période de temps prédéfinie ou pouvant être prédéfinie après une mise en circuit de l'aspirateur (10), il y a passage au-dessous de la valeur maximale selon une valeur prédéfinie ou pouvant être prédéfinie, ou bien une perturbation est détectée et/ou un signal de perturbation est produit quand le degré de remplissage passe au-dessous de la valeur maximale selon la valeur prédéfinie ou pouvant être prédéfinie après la période de temps prédéfinie ou pouvant être prédéfinie.

8. Procédé selon la revendication 8, dans lequel, lors de la détection du remplacement du sac à poussière, le degré de remplissage est enregistré en tant que valeur de référence pour un sac à poussière (68) vide, en particulier dans une mémoire non volatile.

9. Procédé selon l'une des revendications précédentes, dans lequel un affichage de degré de remplissage (46) est piloté en fonction du degré de remplissage déterminé.

10. Procédé selon l'une des revendications précédentes, dans lequel le degré de remplissage est corrigé sur la base d'une perte de pression déterminée sur au moins un filtre disposé en aval du sac à poussière (12) dans un flux d'air d'aspiration.

11. Dispositif de commande (40) pour un aspirateur (10) avec une mémoire (42) et une unité de traitement (44), dans lequel des instructions de code de programme pour la mise en oeuvre du procédé selon l'une des revendications précédentes sont enregistrées dans la mémoire (42), et dans lequel l'unité de traitement (44) effectue, pendant le fonctionnement lors de l'exécution des instructions de code de programme, un pilotage d'un affichage de degré de remplissage de sac à poussière (46) en fonction du degré de remplissage déterminé.

12. Dispositif de commande selon la revendication 12 avec un affichage de degré de remplissage de sac à poussière (46) pouvant être piloté électriquement.

13. Dispositif de commande selon l'une des revendications 12 ou 13, avec un chronomètre pour un affichage de progression d'aspiration.

Fig. 1

Fig. 2

Fig. 3

Fig. 4

Fig. 5

Fig. 6

38a

44

42

26

72

66

68

70

40

46

Fig. 7

76

78

80

74

82

84

68

Fig. 8

86

88

80

Ja

Nein

Ja

Nein

Ja

Nein

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3914305 C2
- DE 4323222 C2
- WO 2007017320 A1
- US 6571422 B1